# EUROPEAN PATENT APPLICATION

(11) **EP 0 839 645 A2**
(43) Date of publication of application: **06.05.1998**
(21) Application number: 97308505.3
(22) Date of filing: 24.10.1997
(51) Int. Cl.: B32B 27/08

(54) **Multi-layer structures**

(30) Priority: 31.10.1996 GB 9622716
(71) Applicant: BP Chemicals Limited, London EC2M 7BA (GB)
(72) Inventor: Powell, Anthony Keith, Grangemouth, Stirlingshire FK3 9XH (GB); Bonner, James Graham, Grangemouth, Stirlingshire FK3 9XH (GB)
(74) Representative: Preece, Michael

(57) **Abstract**

A multi-layer structure comprises a first layer comprising a polyketone or a polyolefin or a copolymer of an olefin with an acrylic monomer or a vinyl ester and a second layer comprising a blend of a polyketone and at least one of a polyolefin or a copolymer of an olefin with an acrylic monomer or a vinyl ester, the first and second layers being directly bonded to each other. The copolymer can be ethylene/acrylic acid ethylene/acrylic esters or ethylene/vinyl ester copolymers. The multi-layer structure can be used for a variety of packaging applications.

## Description

The present invention relates to multi-layer structures in particular those containing at least one layer comprising a polyketone/polyolefin or olefin copolymer blend bonded directly to a layer comprising a polyolefin, olefin copolymer or a polyketone.

For the purposes of this patent, polyketones are defined as linear polymers having an alternating structure of (a) units derived from carbon monoxide and (b) derived from one or more olefinically unsaturated compounds.

Such polyketones have repeating units of the formula: 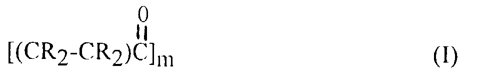 where the R groups are independently hydrogen or hydrocarbyl groups, and m is a large integer; they are disclosed in several patents e.g. US 3694412. Processes for preparing the polyketones are disclosed in US 3694412 and also in EP 181014, EP 121965 and EP 619335.

Multi-layer structures comprising a polyketone layer are known. WO 95/09212 discloses a multi-layer structure comprising a first polyolefin layer and a second polyketone layer. However, such multi-layer structures also comprise a third intermediate layer of a polyolefin-containing adhesive blend to bond the first and second layers together. Simple two-layer structures comprising a polyketone layer have also been disclosed in US5,232,786. However, these are specific to the second layer being cracked polybutylenes, nylon-6, nylon-12, copolyetheresters and PVC.

We have now found that we can successfully bond polyolefins or olefin copolymers to polyketones in a multi-layer structure if the polyketones are first blended with a polyolefin (or olefin copolymers) or vice-versa.

Thus according to the present invention, there is provided a multi-layer structure comprising a first layer comprising either a polyketone or a polyolefin, or a copolymer of an olefin with an acrylic monomer or a vinyl ester and a second layer comprising a blend of a polyketone and at least one of a polyolefin, or a copolymer of an olefin with an acrylic monomer or a vinyl ester the first and second layer being directly bonded to each other.

The advantage of the multi-layer structures of the present invention, is that no melt adhesive is required in the structure.

The first layer of the aforementioned multi-layer structure comprises either a polyketone or a polyolefin, or a copolymer of an olefin with an acrylic monomer or a vinyl ester. The second layer of the aforementioned multi-layer structure comprises a blend ofa polyketone and at least one of a polyolefin, or a copolymer of an olefin with an acrylic monomer or a vinyl ester.

As noted above for the purposes of this patent, polyketones are defined as linear polymers having an alternating structure of (a) units derived from carbon monoxide and (b) units derived from one or more olefinically unsaturated compounds. Suitable olefinic units are those derived from C₂ to C₁₂ alpha-olefins or substituted derivatives thereof or styrene or alkyl substituted derivatives of styrene. It is preferred that such olefin or olefins are selected from C₂ to C₆ normal alpha-olefins and it is particularly preferred that the olefin units are either derived from ethylene or most preferred of all from a mixture of ethylene and one or more C₃ to C₆ normal alpha-olefin(s) especially propylene. In these most preferable materials it is further preferred that the molar ratio of ethylene units to C₃ to C₆ normal alpha-olefin units is greater than or equal to 1 most preferably between 2 and 30. Typically, the polyketone will be a copolymer of ethylene/propylene/CO where the propylene is in the range 5-8% e.g. 6% by weight of the polymer.

The polyketone will suitably have a weight average molecular weight of between 20,000 and 1,000,000 preferably between 50,000 and 250,000 for example 60,000 to 150,000. A preferred polyketone is an ethylene/propylene/CO terpolymer having a weight average molecular weight in the range 60,000 to 150,000.

When the polymer comprised in the first layer (when the first layer is a polyolefin, or a copolymer of an olefin with an acrylic monomer or a vinyl ester) and comprised in the blend of polyketone and polyolefin or a copolymer of an olefin with an acrylic monomer or a vinyl ester which comprises the second layer, is a polyolefin this can be a homopolymer or copolymer of two or more olefins e.g. ethylene or propylene, in particular high density polyethylene (HDPE), low density polyethylene (LDPE), linear low density polyethylene (LLDPE) or very low density polyethylene (VLDPE). Where the polyolefin is a copolymer of ethylene the comonomer is typically one or more alpha-olefins. Suitable alpha-olefins include those having from 3 to 10 carbon atoms such as propylene, butene-1, hexene-1, 4-methylpentene-1 and octene-1. Typically LLDPE will be a copolymer of ethylene with at least one such alpha olefin preferably having 4 to 8 carbon atoms for example butene-1 hexene-1, 4 methyl pentene-1 or octene-1. VLDPE will typically contain at least one, preferably at least two, such alpha-olefins.

Where the polyolefin is polypropylene this can be atactic, syndiotatic or isotactic polypropylene.

Other polyolefins are known and can be used in this invention.

Where the first layer or the blend of the second layer comprises a copolymer of an olefin with an acrylic monomer or a vinyl ester, the copolymer will typically contain 1-90% by weight of the acrylic monomer or vinyl ester preferably 5-60 for example 45-55. The acrylic monomer can be any acrylic monomer polymerisable with an olefin for example acrylic acid, or methacrylic acid or esters thereof for example methyl or ethyl acrylate; the vinyl ester likewise can be any vinyl ester that is polymerisable with an olefin for example vinyl acetate. Typical copolymers of an olefin with an acrylic monomer or a vinyl ester are ethylene/acrylic acid copolymer, ethylene/ethyl acrylate copolymer, ethylene/vinyl acetate, and ethylene/methyl acrylate copolymers.

The copolymer of an olefin with an acrylic monomer or a vinyl ester will typically have an average molecular weight in the range 20,000-1,000,000 preferably 40,000-250,000 for example 60-150,000.

Blends of two or more polyolefins or copolymers of an olefin with an acrylic monomer or a vinyl ester can be used in this invention. Where the first layer of the multi-layer structure is a polyolefin,or a copolymer of an olefin with an acrylic monomer or a vinyl ester, the polyolefin or copolymer of an olefin with an acrylic monomer or a vinyl ester can be the same or different to the polyolefin or copolymer of an olefin with an acrylic monomer or a vinyl ester comprised in the blend of polyketone with such a polymer, preferably the same

The multi-layer structures of the present invention include at least a first and a second layer, the second layer comprising a blend as defined above but may include three or more layers provided the first and second layers as defined above are in direct contact. The third layer could comprise a wide variety of materials for example PET, polycarbonate, polystyrene, or polyvinyl chloride. The may be flat such as sheet or film, shaped such as pipe or tubing or further processed such as by blow-moulding into containers etc.

The present invention includes articles produced by thermo-forming a multilayered film or sheet comprising a first layer comprising either a polyketone or a polyolefin or a copolymer of an olefin with an acrylic monomer or a vinyl ester and a second layer comprising a blend of a polyketone and a polyolefin, or a copolymer of an olefin with an acrylic monomer or a vinyl ester the first and second layer being in direct contact.

In particular, such articles and materials are useful in a variety of applications for example for food, medical, pharmaceutical and industrial packaging. In particular they are useful where chemical resistance and solvent barrier would be of interest for example fuel lines, pipes and tanks.

The present invention will now be illustrated by the following Example.

### Example

A three layer coextrusion was produced from a LDPE (LD1320AA supplied by BP Chemicals, Melt Flow Rate = 2g/10min at 190°C & 2.16kg load; Density = 923kg/m³) and a LLDPE/Polyketone 50/50w/w blend. The LLDPE used was LL0209AA, supplied by BP Chemicals: MFR = 0.9g/10min at 190° & 2.16kg load; density = 920kg/m³. The Polyketone had a melting point of 200°C and MFR of 44g/10min (240°C, 5kg). The blend was produced by melt compounding in a twin screw extruder. The coextrusion was produced by feeding molten LDPE using a single screw extruder (barrel set temperature = 220°C) and molten LLDPE/Polyketone blend, using a separate single screw extruder (barrel set temperature = 220°C) into a die designed to produce three layer film. The LDPE formed the two outer layers (25 µm each) with the blend in the middle (50µm). Good adhesion was achieved between the three layers, that is no delamination occurred on handling the film The oxygen barrier performance of the film was improved over that for typical LDPE alone around two times. The oxygen permeability coefficient of the film was 89cc.mm/m²/day/atm at 23°C and 0% relative humidity.

Further multilayer structures (3 layer) were produced using the following procedure:

Compression moulded sheets of each of the individual component of the multilayer structure were separately produced using a "picture frame" mould, 150mm x 150mm x approx. 120µm. Sample mass should be calculated to ensure that the mould is filled completely and the moulding temperature pressure and times should be determined for each material, i.e., the aim is to achieve a consistent sheet of each material. Use approx. 0.25mm thick PTFE sheet as mould backing material.

The sheets are then subsequently "sandwich moulded" to produce the desired multilayer structure. This is achieved by the use of a 150mm x 150mm x approx. 360µm mould. The 3 individual sheets are placed within the mould in the desired order, again using PTFE as backing material. The mould is then placed in the preheated press for 30s under no pressure. The pressure is increased to 10 tons for 10s and then the mould is cooled under pressure. Initial press temperature is material and material combination dependent. For example, for 3 semi crystalline materials the press temperature would be typically at least 20°C above that of the highest melting point material.

The resultant sheet is then assessed for adhesion performance, i.e. can the multilayer sheet be handled without delamination.

### Materials and structures assessed:

- 50/50 blend of: Polyketone (Mpt 224°C, MFR 25 g/10mins (250°C, 5kg) Linear low-density polyethylene LL0209AA
- 70/30 blend of: EMAC (ethylene-methyl acrylate copolymer) SP2260 MFK 2 g/10 mins (190°C, 2.16kg) & Density 0.947g/cc Cheveron Chemical Company
- Polyketone (Mpt 224°C, MFR 25 g/10mins (250°C, 5kg)
These blends were individually "sandwich moulded" between polyketones and BP Chemicals, polyethylene PC 002-40 (MFR 0.2 g/10mins (190°C, 2 16kg) and Density 0.940 g/cc). In both cases good adhesion was achieved between the three layers, that is no delamination occurred on handling the multilayer structure.

## Claims

1. A multi-layer structure comprising a first layer comprising either a polyketone or a polyolefin, or a copolymer of an olefin with an acrylic monomer or a vinyl ester and a second layer comprising a blend of a polyketone and at least one of a polyolefin, or a copolymer of an olefin with an acrylic monomer or a vinyl ester the first and second layers being directly bonded to each other.

2. A multi-layer structure as claimed in Claim I wherein the first layer comprises a polyketone.

3. A multi-layer structure as claimed in Claim 2 wherein the polyketone is an ethylene/propylene/CO terpolymer.

4. A multi-layer structure as claimed in Claim 3 wherein the polyketone has a weight average molecular weight in the range 60,000 - 150,000.

5. A multi-layer structure as claimed in Claim 1 wherein the first layer comprises a polyolefin.

6. A multi-layer structure as claimed in Claim 5 wherein the polyolefin is polyethylene.

7. A multi-layer structure as claimed in Claim 6 wherein the polyethylene is a homopolymer.

8. A multi-layer structure as claimed in Claim 5 wherein the polyethylene is a copolymer of ethylene and at least one alpha-olefin.

9. A multi-layer structure as claimed in Claim 6 where the polyolefin comprised in both the first layer and the blend of polyketone and polyolefin is the same.

10. A multi-layer structure as claimed in Claim 1 wherein the first layer is a copolymer of an olefin with an acrylic monomer or a vinyl ester.

11. A multi-layer structure as claimed in Claim 10 wherein the copolymer is a copolymer of ethylene and methyl acrylate.

12. A multi-layer structure as claimed in Claim 1 wherein the second layer comprises a blend of a polyketone and a copolymer of an olefin with an acrylic monomer and a vinyl ester.

13. A multi-layer structure as claimed in Claim 12 wherein the copolymer is a copolymer of ethylene and methyl acrylate.

14. An article moulded from a multi-layer structure as claimed in any one of claims 1 to 13.
